# EUROPEAN PATENT APPLICATION

(11) **EP 4 700 367 A1**
(43) Date of publication of application: **25.02.2026**
(21) Application number: 25193796.7
(22) Date of filing: 04.08.2025
(51) Int. Cl.: G01N 21/55, G01N 21/71, G01N 25/72, G01N 21/84, B23K 26/03, B23K 31/12

(54) **APPARATUS AND METHOD FOR ANALYSING A PROCESS ABNORMALITY OF A LASER PROCESS**

(30) Priority: 21.08.2024 KR 20240112424
(71) Applicant: SAMSUNG SDI CO., LTD., Yongin-si, Gyeonggi-do 17084 (KR); AJOU UNIVERSITY INDUSTRY-ACADEMIC COOPERATION FOUNDATION, Gyeonggi-do 16499 (KR)
(72) Inventor: LEE, Dong Ho, 16678 Suwon-si, Gyeonggi-do (KR); RYU, Sang Hyun, 16678 Suwon-si, Gyeonggi-do (KR); PARK, Sang Ki, 16678 Suwon-si, Gyeonggi-do (KR); AN, Yong Gyu, 16678 Suwon-si, Gyeonggi-do (KR); SHIN, Young Chul, 16499 Suwon-si, Gyeonggi-do (KR); YOON, Sang Jun, 16499 Suwon-si, Gyeonggi-do (KR); CHOI, Jae Koung, 16499 Suwon-si, Gyeonggi-do (KR)
(74) Representative: Gulde & Partner

(57) **Abstract**

An apparatus and a corresponding method for analyzing a laser process, the apparatus including a sensor module (100) configured to acquire an optical signal generated during a laser process of a target, and a processor (300) configured to detect an abnormality of the laser process through an instantaneous change analysis process of the optical signal performed whenever the optical signal is acquired by the sensor module (100), and a longitudinal change analysis process of the optical signal performed at a time point when a target time section ends, the target time section being a time during which the laser process is performed.

## Description

### BACKGROUND

### 1. Field

The present disclosure relates to an apparatus and method for analyzing a process abnormality of a laser process.

### 2. Description of the Related Art

Secondary batteries are batteries that can be charged and discharged unlike primary batteries that cannot be charged. Low-capacity batteries are used in small portable electronic devices such as smartphones, feature phones, notebook computers, digital cameras, and camcorders, and large-capacity batteries are widely used as power sources and power storage batteries for driving motors in hybrid electric vehicles, electric vehicles, and the like. A secondary battery includes an electrode assembly composed of positive and negative electrodes, a case that accommodates the electrode assembly, electrode terminals connected to the electrode assembly, and the like.

The above information disclosed in this Background section is for enhancement of understanding of the background of the present disclosure, and therefore, it may contain information that does not constitute related (or prior) art.

### SUMMARY

Embodiments include an apparatus for analyzing a laser process, the apparatus including a sensor module configured to acquire an optical signal generated during a laser process of a target, and a processor configured to detect an abnormality of the laser process through an instantaneous change analysis process of the optical signal performed whenever the optical signal is acquired by the sensor module, and a longitudinal change analysis process of the optical signal performed at a time point when a target time section ends, the target time section being a time during which the laser process is performed.

When performing the instantaneous change analysis process, the processor may be further configured to detect the abnormality of the laser process by determining whether an optical signal differential value is within a first normal range defined as a range of a first lower limit value or more and a first upper limit value or less, wherein the optical signal differential value is a differential value of intensity of the optical signal with respect to time at a time point when the optical signal is acquired.

The first normal range may be predefined as a range according to a lower limit value and an upper limit value of an optical signal differential value acquired in advance in a state in which the abnormality of the laser process did not occur.

The processor may be further configured to determine that the laser process is abnormal if a currently calculated optical signal differential value is out of the first normal range.

When performing the longitudinal change analysis process, the processor may be further configured to detect the abnormality of the laser process by determining whether an optical signal integral value is within a second normal range defined as a range of a second lower limit value or more and a second upper limit value or less, wherein the optical signal integral value is an integral value of intensity of the optical signal with respect to time in the target time section.

The second normal range may be predefined as a range according to a lower limit value and an upper limit value of the optical signal integral value acquired in advance in a state in which the abnormality of the laser process did not occur.

The processor may be further configured to determine that the laser process is abnormal if a currently calculated optical signal integral value is out of the second normal range.

When performing the instantaneous change analysis process, the processor may be further configured to determine whether the optical signal differential value is within a risk range defined as a range of a third lower limit value or more and a third upper limit value or less, wherein the risk range is different than the first normal range.

The third lower limit value may be greater than the first lower limit value.

The processor may be further configured to count the optical signal differential value within the risk range during the target time section, resulting in a counted value, and if the counted value is out of a predefined threshold range based on the time point when the target time section ends, the processor may determine that the laser process is abnormal.

The third lower limit value may be greater than or equal to an average value of optical signal differential values acquired in advance during the target time section in a state in which the abnormality of the laser process did not occur.

The processor may be further configured to determine that the laser process is abnormal if an intensity of a finally acquired optical signal within the target time section is a predefined threshold value or more.

The optical signal may include a plurality of optical signals distinguished according to a wavelength, and the instantaneous change analysis process and the longitudinal change analysis process are designed for each of the plurality of optical signals, and the processor may be further configured to perform the instantaneous change analysis process and the longitudinal change analysis process designed for each of the plurality of optical signals during the target time section and comprehensively analyze performance results to detect the abnormality of the laser process.

The processor may be further configured to update a first normal range predefined for the instantaneous change analysis process and a second normal range predefined for the longitudinal change analysis process using the optical signal acquired during the target time section when the laser process of the target is completed and the laser process is not abnormal.

Embodiments include a method of analyzing a laser process, the method including acquiring, by a processor, an optical signal generated during a laser process of a target through a sensor module, and detecting, by the processor, an abnormality of the laser process through an instantaneous change analysis process of the optical signal performed whenever the optical signal is acquired by the sensor module, and a longitudinal change analysis process of the optical signal performed at a time point when a target time section ends, the target time section being a time during which the laser process is performed.

Detecting the abnormality may include performing, by the processor, the instantaneous change analysis process by determining whether an optical signal differential value is within a first normal range defined as a range of a first lower limit value or more and a first upper limit value or less, wherein the optical signal differential value is a differential value of intensity of the optical signal with respect to time at a time point when the optical signal is acquired.

Detecting the abnormality may include performing, by the processor, the longitudinal change analysis process by determining whether an optical signal integral value is within a second normal range defined as a range of a second lower limit value or more and a second upper limit value or less, wherein the optical signal integral value is an integral value of an intensity of the optical signal with respect to time in the target time section.

Performing the instantaneous change analysis process may include determining, by the processor, whether the optical signal differential value is within a risk range defined as a range of a third lower limit value or more and a third upper limit value or less, wherein the third lower limit value is greater than the first lower limit value.

Detecting the abnormality may further include determining, by the processor, that the laser process is abnormal if an intensity of a finally acquired optical signal within the target time section is a predefined threshold value or more.

The method may further include updating, by the processor, a first normal range predefined for the instantaneous change analysis process and a second normal range predefined for the longitudinal change analysis process using the optical signal acquired during the target time section if the laser process of the target is completed and the laser process is not abnormal.

However, objects that the present disclosure intends to achieve are not limited to the above-described objects and other objects that are not described may be clearly understood by those skilled in the art from the following description.

### BRIEF DESCRIPTION OF THE DRAWINGS

Features will become apparent to those of ordinary skill in the art by describing in detail exemplary embodiments with reference to the attached drawings, in which:
FIG. 1 shows a view for describing an example of a method for analyzing a laser process;
FIG. 2 shows a block diagram of an apparatus for analyzing a laser process according to one or more embodiments of the present disclosure;
FIGS. 3 to 5 show exemplary views for describing an analysis process performed by the apparatus for analyzing a laser process according to one or more embodiments of the present disclosure; and
FIGS. 6 and 7 show flowcharts of a method of analyzing a laser process according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

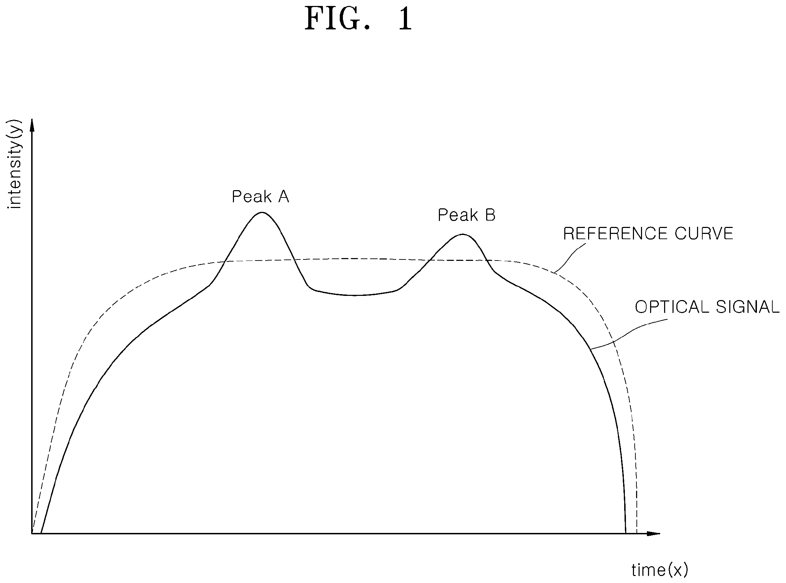

FIG. 1 is a view for describing an example of a method for analyzing a laser process. In the example of FIG. 1, a reference curve is used to detect an abnormality of the laser process.

The reference curve of FIG. 1 is formed to be compared with an optical signal generated during the laser process. When an area under the reference curve in the time and intensity coordinate system of FIG. 1 is defined as a reference area, in a case in which the optical signal generated during the laser process has portions Peak A and Peak B which are out of the reference area as shown in FIG. 1, it may be determined that the abnormality of a current laser process has occurred. The reference curve applied to the above process is formed by a method of plotting a plurality (e.g., several tens or hundreds) of optical signals acquired in advance in a coordinate system in a state in which there is no abnormality of the laser process (i.e., when a product manufactured according to the corresponding laser process is a normal product) and deriving a curve that covers all waveforms of the plurality of plotted optical signals.

In the case of a method of analyzing a laser process based on the above-described reference curve, considerable time and hardware resources are required to generate the reference curve, and when the intensity of an optical signal acquired through a sensor is finely changed, it is difficult to accurately compare the above fluctuation with the reference curve, and thus there is a limitation to precisely detecting the abnormality of the laser process.

In addition, when a model of a product to be manufactured is changed during a mass production process of the product to be manufactured or preventive maintenance (PM) is performed on manufacturing equipment, considerable time and hardware resources are required to secure a new reference curve, resulting in problems of an increased lead time and increased material loss.

To solve the problems of the method of analyzing a laser process based on the reference curve, the present embodiment adopts a configuration that mathematically interprets the optical signal generated during the laser process to detect the abnormality of the laser process and defective products accordingly.

A target product indicated below is a product to be manufactured through the laser process, for example, a battery cell or a battery pack. In addition, the target is a component of the target product, for example, an electrode tab, an electrode lead, or a metal case of the battery cell. In addition, the laser process may be a laser welding process between the electrode tab and the electrode lead, a laser welding process between the electrode lead and a busbar, or a laser cutting process for cutting a metal case. However, the definition of the above terms indicates that the present embodiment can be applied to a battery manufacturing process, and the present embodiment can be applied to any manufacturing process in which a laser process is applied to the manufacture of products.

Based on the above content, an apparatus for analyzing a laser process of the present embodiment will be described in detail.

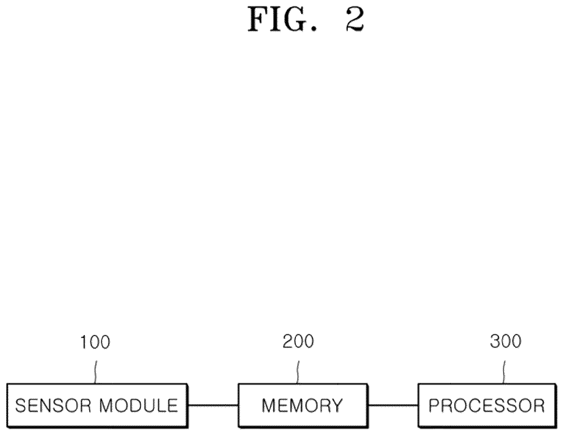

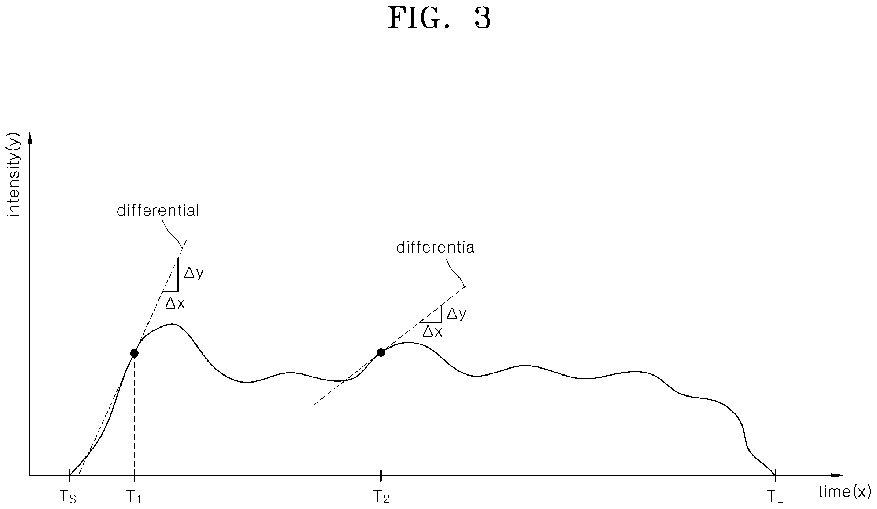

FIG. 2 shows a block diagram of an apparatus for analyzing a laser process according to one or more embodiments of the present disclosure, and FIGS. 3 to 5 show exemplary views for describing an analysis process performed by the apparatus for analyzing a laser process according to one embodiment of the present disclosure.

Referring to FIG. 2, the apparatus for analyzing a laser process of the present embodiment may include a sensor module 100, a memory 200, and a processor 300, and laser equipment for performing a laser process on the target may be provided in the present embodiment. The laser equipment may include, for example, a head provided with a laser light source, a guide device for guiding a laser to a target, and an optical device for focusing the laser to the target.

The sensor module 100 may be configured to acquire an optical signal generated during the laser process of the target. The optical signal may include a plurality of optical signals distinguished according to wavelength. For example, the plurality of optical signals may include a plasma radiation signal (in a first wavelength band of 400 nm or less) generated from a surface of the target in the laser process, a laser reflection light signal (in a second wavelength band (e.g., 1070 nm) of the corresponding laser light source), and an infrared signal (in a third wavelength band ranging from 1100 nm to 1800 nm or less) due to thermal radiation. To acquire each of the plurality of optical signals, the sensor module 100 may include a first photodiode (i.e., a plasma radiation signal detection sensor) having a spectral sensitivity for the first wavelength band, a second photodiode (i.e., a laser reflection light signal detection sensor) having a spectral sensitivity for the second wavelength band, and a third photodiode (i.e., an infrared signal detection sensor) having a spectral sensitivity for the third wavelength band, and each photodiode may be provided at a predetermined location of the laser equipment to detect each optical signal. An abnormality determination operation of the laser process that will be described below may be performed independently on each of the plasma radiation signal, the laser reflection light signal, and the infrared signal. The optical signal acquired by the sensor module 100 is transmitted to the processor 300 that will be described below.

The memory 200 may store at least one command to be executed by the processor 300 and also store a first normal range (a first lower limit value and a first upper limit value), a second normal range (a second lower limit value and a second upper limit value), a dangerous range (a third lower limit value and a third upper limit value), a threshold range, and a threshold value that function as reference values for determining the abnormality of the laser process. The memory 200 may be implemented as a volatile storage medium and/or a non-volatile storage medium and implemented as, for example, a read only memory (ROM) and/or a random access memory (RAM).

The processor 300 corresponds to a subject that mathematically interprets the optical signal acquired by the sensor module 100 to detect the abnormality of the laser process and may be configured to perform a function of a controller for controlling the laser process for the target through the operation control of the above-described laser equipment. The processor 300 may be implemented as a central processing unit (CPU) or system on chip (SOC), to control a plurality of hardware or software components connected to the processor 300 by driving an operating system or application, and perform processing and calculation on various types of data. The processor 300 may be configured to execute at least one command stored in the memory 200 and store execution result data in the memory.

In the present embodiment, the processor 300 may detect the abnormality of the laser process through the instantaneous change analysis process of the optical signal performed whenever the optical signal is acquired by the sensor module 100, and the longitudinal change analysis process of the optical signal performed at the time point when the target time section ends in the target time section during which the laser process is performed. The target time section may be the time during which the laser light source is turned on and the radiated state of the laser is maintained, that is, when the laser process is performed by a method of repeating a turn-on operation and turn-off operation of the laser light source, the turned-on time of the laser light source may be defined as the target time section (i.e., the time during which each unit laser process constituting the entire laser process is performed).

The instantaneous change analysis process functions as a process for detecting the abnormality of the laser process performed whenever the optical signal is acquired by the sensor module 100 in real time within the target time section (i.e., whenever the optical signal is sampled), and the longitudinal change analysis process functions as a process for detecting the overall abnormality of the unit laser process.

Each analysis process will be described in detail below.

When performing the instantaneous change analysis process, the processor 300 may detect the abnormality of the laser process in real time in a manner of (e.g., by) determining whether an optical signal differential value is within the first normal range (see FIG. 3).

The optical signal differential value may be defined as a differential value of intensity of the optical signal with respect to time at the time point when the optical signal is acquired and may correspond to the slope of the tangent line of the optical signal acquired at a time point T1 or T2 in the example of FIG. 3 (an algorithm for calculating the optical signal differential value may be predefined in the memory 200) (only two optical signal differential values are shown in FIG. 3 for the clear description of the embodiment).

The first normal range may be predefined as a range of the first lower limit value or more and the first upper limit value or less in the memory 200. Here, the first limit value may be designed as a lower limit value of an optical signal differential value acquired in advance (i.e., a lower limit value of differential values of a plurality of optical signals acquired in the corresponding laser process when the product manufactured in the laser process was a normal product in advance) in a state in which the laser process is not abnormal, and likewise, the first upper limit value may be designed as an upper limit value of optical signal differential values acquired in advance in a state in which the laser process is not abnormal.

Therefore, when a currently calculated optical signal differential value is within the first normal range (i.e., within a range of the first lower limit value or more and the first upper limit value or less), the processor 300 may determine that the laser process is being performed normally and continuously perform the instantaneous change analysis process, and when the currently calculated optical signal differential value is out of the first normal range, the processor 300 may determine that the laser process is abnormal. The processor 300 may store the performance result information of the instantaneous change analysis process in the memory 200, and the stored information may be used to determine whether the manufactured product is a normal or defective product in the future.

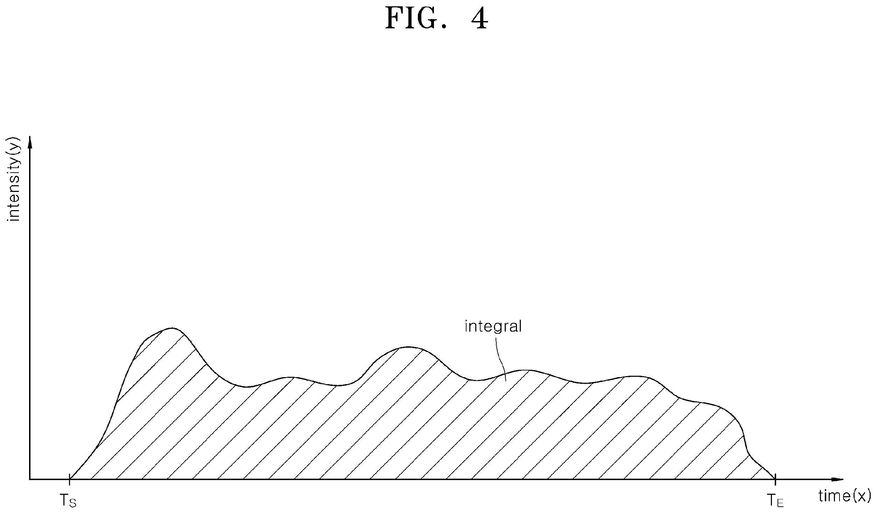

When the abnormality of the laser process is not detected through the instantaneous change analysis process performed in the target time section, the processor 300 may perform the longitudinal change analysis process at the time point when the target time section ends to detect the overall abnormality of the corresponding unit laser process. When performing the longitudinal change analysis process, the processor 300 may detect the abnormality of the laser process in a manner of determining whether an optical signal integral value is within the second normal range (see FIG. 4).

The optical signal integral value may be defined as an integral value of the intensity of the optical signal with respect to time in the target time section, and in the example of FIG. 4, may correspond to the area of the waveform of the intensity of the optical signal in a time section of time point TS (start time point of the target time section) and time point TE (end time point of the target time section), and the algorithm for calculating the optical signal integral value may be predefined in the memory 200.

The second normal range may be predefined as a range of the second lower limit value or more and the second upper limit value or less in the memory 200. Here, the second limit value may be designed as a lower limit value of an optical signal integral value acquired in advance (i.e., a lower limit value of integral values of a plurality of optical signals acquired in the corresponding laser process when the product manufactured in the laser process was a normal product in advance) in a state in which the laser process is not abnormal, and likewise, the second upper limit value may be designed as an upper limit value of optical signal integral values acquired in advance in a state in which the laser process is not abnormal.

Therefore, when a currently calculated optical signal integral value is within the second normal range (i.e., within a range of the second lower limit value or more and the second upper limit value or less), the processor 300 may determine that the laser process is being performed normally, and when the currently calculated optical signal integral value is out of the second normal range, the processor 300 may determine that the laser process is abnormal. The processor 300 may store the performance result information of the longitudinal change analysis process in the memory 200, and the stored information may be used to determine whether the manufactured product is a normal or defective product in the future.

In the laser process, the instantaneous change analysis process may calculate the instantaneous change of the intensity of the optical signal (i.e., the optical signal differential value) in real time and compare the calculated instantaneous change with the first normal range to detect the abnormality of the laser process in real time, and even when the abnormality of the laser process is not detected through the instantaneous change analysis process, may calculate the longitudinal change of the intensity of the optical signal (i.e., the optical signal integral value) at the end time point of the target time section and compare the calculated longitudinal change with the second normal range to detect the abnormality of the overall laser process, thereby more precisely detecting the abnormality of the laser process and a defective product accordingly.

Meanwhile, in addition to the instantaneous change analysis process and the longitudinal change analysis process, the following analysis process for more precisely detecting the abnormality of the laser process is introduced in the present embodiment.

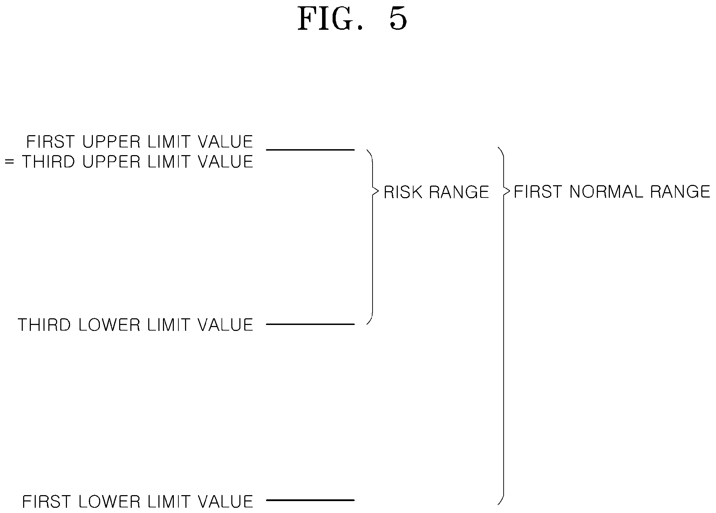

When performing the instantaneous change analysis process, the processor 300 may determine whether the optical signal differential value is within a risk range (see FIGS. 3 and 5).

The risk range may be predefined as a range of the third lower limit value or more and the third upper limit value or less in the memory 200. The risk range may be formed to have a different range from the above-described first normal range and specifically, may be formed to have a smaller (narrower) range than the first normal range. For a non-limiting example, the third lower limit value of the risk range may be formed to have a greater value than the first lower limit value of the first normal range, and the third upper limit value of the risk range may be formed to have the same value as the first upper limit value of the first normal range. FIG. 5 shows the first normal range and the risk range separately.

In particular, the third lower limit value of the risk range may be designed to have a value that is greater than or equal to an average value (i.e., an average value of differential values of the plurality of optical signals acquired in the corresponding laser process when the product manufactured according to the laser process was a normal product in advance) of optical signal differential values acquired in advance during the target time section in the state in which the laser process was not abnormal.

In the above-described instantaneous change analysis process, even when it is determined that the laser process is being performed normally because the currently calculated optical signal differential value is within the first normal range, the processor 300 may separately count the corresponding optical signal differential value when the currently calculated optical signal differential value is within the risk range. When the optical signal differential value is greater than or equal to the average value of the optical signal differential values acquired in advance (i.e., greater than or equal to the third lower limit value), it can be seen that there is a possibility that there is a process difference between the currently performed laser process and the laser process that was performed normally in advance. Since the threshold range for quantitatively verifying the 'possibility of process deviation' may be predefined in the memory 200, when a finally counted value is out of the threshold range based on the time point when the target time section ends, the processor 300 may determine that the possibility of process deviation has been verified (i.e., determine that a defective product may occur because there is the process deviation between the currently performed laser process and the laser process that was normally performed in advance) to determine that the abnormality of the current laser process has occurred. When the finally counted value is out of the threshold range based on the time point when the target time section ends, it may mean, for example, that the finally counted value exceeds a predefined threshold value, and such threshold range and threshold value may be predefined in the memory 200 based on the designer's intention and experimental results.

The processor 300 may store the performance result information of the above analysis process in the memory 200, and the stored information may be used to determine whether the manufactured product is a normal or defective product in the future.

Additionally, the processor 300 may be operated to compare the intensity of the finally acquired optical signal within the target time section with a predefined threshold value to detect the abnormality of the laser process. Since the finally acquired optical signal through the sensor module 100 has an intensity of a predetermined level or lower in that the optical signal is formed in a state immediately before the laser light source enters a turn-off state, and accordingly, the processor 300 may determine that the laser process is abnormal when the intensity of the finally acquired optical signal within the target time section is greater than or equal to the threshold value. The threshold value may be predefined in the memory 200 based on the designer's intention and experimental results.

The process of determining the abnormality of the laser process through the operation of comparing the optical signal differential value with the first normal range, the operation of comparing the optical signal integral value with the second normal range, the operation of comparing the optical signal differential value with the risk range, and the operation of comparing the finally acquired optical signal intensity with the threshold range as described above may be performed independently on each of the plurality of optical signals, that is, the plasma radiation signal, the laser reflection signal, and the infrared signal. That is, the processor 300 may be configured to perform a laser process abnormality determination process on the plasma radiation signal (hereinafter referred to as a first process), a laser process abnormality determination process on the laser reflection light signal (hereinafter referred to as a second process), and a laser process abnormality determination process on the infrared signal (hereinafter referred to as a third process), and then comprehensively analyze the respective performance results to detect the abnormality of the laser process. In this case, the processor 300 may finally determine that the abnormality of the laser process has occurred when it is determined that the laser process is abnormal in one or more of the first to third processes.

In a case in which the laser process of the target is completed and the laser process is not abnormal (i.e., a case in which the abnormality of the laser process is not detected in any of the above-described first to third processes), the processor 300 may be configured to update the above-described first normal range, second normal range, and risk range using the optical signal acquired during the target time section. That is, when the laser process is not abnormal (e.g., is normal), the processor 300 may be configured to cumulatively store the lower and upper limit values of all optical signal differential values and the optical signal integral values acquired in the target time section in each unit laser process, and when receiving an update command from a user later, the processor 300 may update the first normal range, the second normal range, and the risk range based on the lower and upper limit values of all optical signal differential values and the optical signal integral values cumulatively stored in the memory 200.

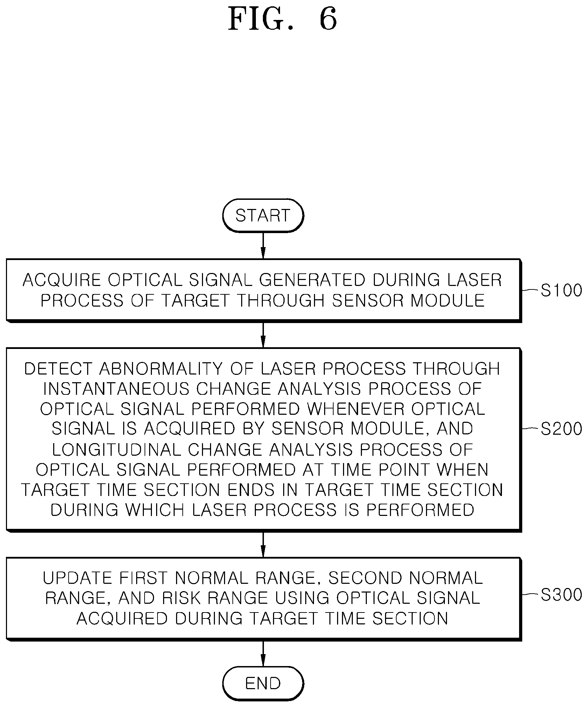

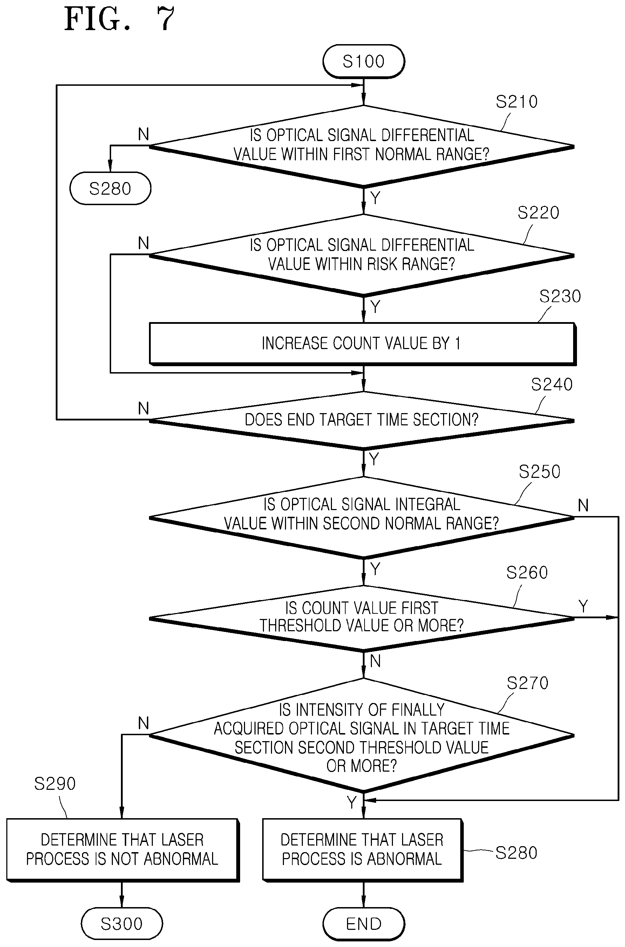

FIGS. 6 and 7 show flowcharts of a method of analyzing a laser process according to one embodiment of the present disclosure. The method of analyzing the laser process of the present embodiment will be described with reference to FIGS. 6 and 7, detailed descriptions of the overlapping components of the above-described contents will be omitted, and the description will focus on the time-series configuration.

Referring to FIG. 6, first, the processor 300 acquires the optical signal generated during the laser process of the target through the sensor module 100 (S100).

Subsequently, the processor 300 may detect the abnormality of the laser process through the instantaneous change analysis process of the optical signal performed whenever the optical signal is acquired by the sensor module 100, and the longitudinal change analysis process of the optical signal performed at the time point when the target time section ends in the target time section during which the laser process is performed.

Operation S200 will be described in detail with reference to FIG. 7.

The processor 300 determines whether the optical signal differential value is within the first normal range (S210).

When it is determined that the optical signal differential value is out of the first normal range in operation S210, the processor 300 determines that the laser process is abnormal (S280). To eliminate the waste of hardware resources additionally required for the abnormality determination operation of the laser process as much as the abnormality of the laser process is detected, the following operations S220 to S270 may not be performed.

When it is determined that the optical signal differential value is within the first normal range in operation S210, the processor 300 determines whether the optical signal differential value is within the risk range (S220).

When it is determined that the optical signal differential value is within the risk range in operation S220, the processor 300 increases a count value initially set to a value of 0 by 1 (S230).

When it is determined that the optical signal differential value is out of the risk range in operation S220 or when the count value is increased through operation S230, the processor 300 determines whether the target time section has ended (i.e., determines whether the unit laser process has ended) (S240). When the target time section has not ended, operation S210 is performed again.

When the target time section has ended, the processor 300 determines whether the optical signal integral value is within the second normal range (S250).

When it is determined that the optical signal integral value is out of the second normal range in operation S250, the processor 300 determines that the laser process is abnormal (S280). To eliminate the waste of hardware resources additionally required for the abnormality determination operation of the laser process, the following operations S260 and S270 may not be performed.

When it is determined that the optical signal integral value is within the second normal range in operation S250, the processor 300 determines whether the counted value through operation S230 is greater than or equal to a predefined threshold value (first threshold value) (S260).

When it is determined that the count value is greater than or equal to the threshold value in operation S260, the processor 300 determines that the laser process is abnormal (S280). To eliminate the waste of hardware resources additionally required for the abnormality determination operation of the laser process, the following operation S270 may not be performed.

When it is determined that the count value is smaller than the threshold value in operation S260, the processor 300 determines whether the intensity of the finally acquired optical signal within the target time section is greater than or equal to a predefined threshold value (second threshold value) (S270).

When it is determined that the intensity of the optical signal is greater than or equal to the threshold value in operation S270, the processor 300 determines that the laser process is abnormal (S280). When it is determined that the intensity of the optical signal is smaller (e.g., less) than the threshold value in operation S270, the processor 300 determines that the abnormality of the laser process does not occur (S290).

When it is determined that the laser process is not abnormal in operation S290, the processor 300 updates the first normal range, the second normal range, and the risk range using the optical signal acquired during the target time section (S300).

A laser process can be applied to a process of manufacturing a secondary battery. For example, a laser welding process between a plurality of electrode tabs and electrode leads and a laser welding process between the electrode leads and busbars of a plurality of battery cells can be applied to the process of manufacturing a secondary battery, and a laser cutting process for cutting a metal package or a metal case when manufacturing a pouch-type battery cell can be applied to the process of manufacturing a secondary battery.

The present disclosure is directed to providing an apparatus and method for analyzing a laser process, which are capable of accurately determining whether a laser process is abnormal and whether a product is defective accordingly through a method of mathematically interpreting an optical signal generated during the laser process such as laser welding or laser cutting.

As described above, according to the present disclosure, by adopting a configuration in which the abnormality of a laser process is determined by mathematically analyzing an optical signal through an instantaneous change analysis process of an optical signal performed whenever the optical signal is acquired in a laser process, and a longitudinal change analysis process of the optical signal performed at a time point when a target time section ends, it is possible to reduce the time required for determining the abnormality of the laser process and at the same time, increase the accuracy of abnormality determination.

According to the present disclosure, by adopting a configuration in which the abnormality of a laser process is determined by mathematically analyzing an optical signal through an instantaneous change analysis process of an optical signal performed whenever the optical signal is acquired in a laser process and a longitudinal change analysis process of the optical signal performed at a time point when a unit time section (i.e., a target time section) of the laser process ends, it is possible to reduce the time required for determining the abnormality of the laser process and at the same time, increase the accuracy of abnormality determination.

However, effects that can be achieved through the present embodiments are not limited to the above-described effects and other effects that are not described may be clearly understood by those of ordinary skill in the art from the detailed description herein.

The embodiments described herein may be implemented, for example, as a method or process, a device, a software program, a data stream, or a signal. Although discussed in the context of a single type of implementation (for example, discussed only as a method), features discussed herein may also be implemented in other forms (for example, a device or a program). The device may be implemented by suitable hardware, software, firmware, and the like. The method may be implemented on a device, such as a processor that generally refers to a processing device including a computer, a microprocessor, an integrated circuit, a programmable logic device, etc. The processor includes a communication device such as a computer, a cell phone, a personal digital assistant (PDA), and other devices that facilitate communication of information between the device and end-users.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. An apparatus for analyzing a laser process, the apparatus comprising:
a sensor module (100) configured to acquire an optical signal generated during a laser process of a target; and
a processor (300) configured to detect an abnormality of the laser process through an instantaneous change analysis process of the optical signal performed whenever the optical signal is acquired by the sensor module (100), and a longitudinal change analysis process of the optical signal performed at a time point when a target time section ends, the target time section being a time during which the laser process is performed.

2. The apparatus as claimed in claim 1, wherein, when performing the instantaneous change analysis process, the processor (300) is further configured to detect the abnormality of the laser process by determining whether an optical signal differential value is within a first normal range defined as a range of a first lower limit value or more and a first upper limit value or less, wherein the optical signal differential value is a differential value of intensity of the optical signal with respect to time at a time point when the optical signal is acquired.

3. The apparatus as claimed in claim 2, wherein the first normal range is predefined as a range according to a lower limit value and an upper limit value of an optical signal differential value acquired in advance in a state in which the abnormality of the laser process did not occur.

4. The apparatus as claimed in claim 2, wherein the processor (300) is further configured to determine that the laser process is abnormal if a currently calculated optical signal differential value is out of the first normal range.

5. The apparatus as claimed in claims 1 to 4, wherein, when performing the longitudinal change analysis process, the processor (300) is further configured to detect the abnormality of the laser process by determining whether an optical signal integral value is within a second normal range defined as a range of a second lower limit value or more and a second upper limit value or less, wherein the optical signal integral value is an integral value of intensity of the optical signal with respect to time in the target time section.

6. The apparatus as claimed in claim 5, wherein the second normal range is predefined as a range according to a lower limit value and an upper limit value of the optical signal integral value acquired in advance in a state in which the abnormality of the laser process did not occur.

7. The apparatus as claimed in claim 5, wherein the processor (300) is further configured to determine that the laser process is abnormal if a currently calculated optical signal integral value is out of the second normal range.

8. The apparatus as claimed in claims 2 to 7, wherein, when performing the instantaneous change analysis process, the processor (300) is further configured to determine whether the optical signal differential value is within a risk range defined as a range of a third lower limit value or more and a third upper limit value or less, wherein the risk range is different than the first normal range and/or wherein the third lower limit value is greater than the first lower limit value.

9. The apparatus as claimed in claim 8, wherein the processor (300) is further configured to count the optical signal differential value within the risk range during the target time section, resulting in a counted value, and if the counted value is out of a predefined threshold range based on the time point when the target time section ends, the processor (300) determines that the laser process is abnormal.

10. The apparatus as claimed in claim 8, wherein the third lower limit value is greater than or equal to an average value of optical signal differential values acquired in advance during the target time section in a state in which the abnormality of the laser process did not occur.

11. The apparatus as claimed in claims 1 to 10, wherein the processor (300) is further configured to determine that the laser process is abnormal if an intensity of a finally acquired optical signal within the target time section is a predefined threshold value or more.

12. The apparatus as claimed in claims 1 to 11, wherein the optical signal includes a plurality of optical signals distinguished according to a wavelength, and the instantaneous change analysis process and the longitudinal change analysis process are designed for each of the plurality of optical signals, and
the processor (300) is further configured to perform the instantaneous change analysis process and the longitudinal change analysis process designed for each of the plurality of optical signals during the target time section and comprehensively analyze performance results to detect the abnormality of the laser process.

13. The apparatus as claimed in claims 1 to 12, wherein the processor (300) is further configured to update a first normal range predefined for the instantaneous change analysis process and a second normal range predefined for the longitudinal change analysis process using the optical signal acquired during the target time section when the laser process of the target is completed and the laser process is not abnormal.

14. The apparatus as claimed in claims 1 to 13, wherein the sensor module (100) is configured to acquire an optical signal generated during the laser process of the target and wherein the sensor module (100) comprises a first photodiode, for example a plasma radiation signal detection sensor, having a spectral sensitivity for the first wavelength band, a second photodiode, for example a laser reflection light signal detection sensor having a spectral sensitivity for the second wavelength band, and a third photodiode, for example an infrared signal detection sensor having a spectral sensitivity for the third wavelength band, and wherein each photodiode is provided at a predetermined location of the laser equipment to detect each optical signal.

15. A method of analyzing a laser process, the method comprising:
acquiring, by a processor (300), an optical signal generated during a laser process of a target through a sensor module (100) (S100); and
detecting, by the processor (300), an abnormality of the laser process through an instantaneous change analysis process of the optical signal performed whenever the optical signal is acquired by the sensor module (100), and a longitudinal change analysis process of the optical signal performed at a time point when a target time section ends, the target time section being a time during which the laser process is performed (S200).
